# EUROPEAN PATENT SPECIFICATION

(11) **EP 0 876 848 B1**
(45) Date of publication and mention of the grant of the patent: **17.11.2004**
(21) Application number: 96929556.7
(22) Date of filing: 06.09.1996
(51) Int. Cl.: B05C 1/02, B05D 1/26, B05C 13/00

(54) **METHOD OF APPLYING COATING LIQUID TO BASE PLATE BY DIE COATER**
VERFAHREN ZUM AUFTRAGEN EINER BESCHICHTUNGSFLÜSSIGKEIT AUF EINE PLATTE DURCH EINE BESCHICHTUNGSVORRICHTUNG MIT EINER BREITSCHLITZDÜSE
PROCEDE POUR APPLIQUER UN LIQUIDE SUR UNE PLAQUE DE BASE AU MOYEN D'UN DISPOSITIF D'ENDUCTION A FILIERE

(30) Priority: 22.01.1996 JP 833496; 18.06.1996 JP 15669996
(43) Date of publication of application: 11.11.1998
(73) Proprietor: Chugai Ro Co., Ltd., Osaka-shi, Osaka 550-0003 (JP)
(72) Inventor: NAKAMURA, Masahiro, Kashiba-shi, Nara 639-02 (JP); YOKOYAMA, Takuya, Takatsuki-shi,, Osaka 569 (JP); NISHIO, Tsutomu, Kashiwara-shi, Osaka 582 (JP)
(74) Representative: Glawe, Delfs, Moll & Partner
(86) International application number: PCT/JP1996/002552
(87) International publication number: WO 1997/026999

(56) References cited:
- JP-A- 7 328 513
- JP-B- 7 004 566

## Description

### FIELD OF THE INVENTION

The present invention relates to a method and apparatus for applying a substrate with a coating material by the use of a coating die and to an apparatus for supplying the coating die with the coating material. Particularly, the present invention relates to a method and apparatus for applying a thinned substrate with the coating material in a constant thickness by the use of the coating die. Further, the present invention relates to an apparatus for supplying the coating material, which is applicable to a coating system having the coating die, but not limited thereto.

### BACKGROUND OF THE INVENTION

Japanese Patent Laid-Open Publications Tokkaihei 4-61955 and Tokkaihei 1-135565 disclose a method for applying a photo-resist on a glass plate. Typically, this method is referred to as spin-coating. With this spin-coating, the glass plate is horizontally supported on a rotatable spin chuck. The photo-resist is dropped on an upper central portion of the glass plate. Then, upon rotation of the spin chuck with the substrate, the dropped photo-resist is extended outwardly across the entire surface of the glass plate due to a centrifugal force created by the rotation.

The spin coating, however, can retain a small part of the dropped photo-resist, i.e., only about five percent thereof, on the glass plate, while the major part of the photo-resist, i.e., 95 percent thereof, is wasted without being recycled, which results in that the spin-coating is significantly costly.

Japanese Patent Laid-Open Publication Tokkaisho 56-159646 discloses another coating method in which employed is a coating die having a distribution slot for distributing the coating material therefrom. According to this coating method, simply by moving the coating die relative to and along the surface of the glass plate, all the photo-resist distributed from the nozzle will be applied onto the surface of the glass plate, which is more economical than the spin-coating.

Disadvantageously and invariably, most glass plates have three-dimensional deformations (e.g., twisting and curving) and unevenness in thickness. Likewise, a table for supporting the glass plate includes such deformations. This results in that, a film coated by the coating die and formed on the substrate supported by the table, having a thickness of only 10 µm or less, will have a striped pattern with light and shade due to a variation of gap between the coating die and the substrate.

To overcome this problem, Japanese Patent Laid-Open Publication Tokkaihei 7-328513 discloses a method for controlling the coating die. With this method, at coating, the gap (actual gap) between the nozzle of the coating die and each of successively confronting portions of the substrate are pre-measured by a range sensor mounted on the coating die. Using the measured values, the coating die is moved to and from the substrate, keeping the actual gap constant.

In this approach, however, required are two processes; one process for measuring the gaps between the nozzle and the substrate and the other process for calculating deviations between the successive gaps (i.e., measurement) and a reference gap predetermined for forming a coating film of specific thickness. Also, these processes must be done simultaneously in the coating. Actually, however, the latter calculation process requires a considerable time, which prohibits the calculation from catching up with the movement of the coating die. Therefore, this approach can only be applied when the coating speed is lower than the calculation speed, resulting in an unacceptable delay of coating.

Japanese Patent Laid-Open Publication Tokkaihei 5-185022 discloses another coating method. According to this method, each thickness of successive portions of a member to be coated, or metal plate, is pre-measured by a sensor at a measurement station on a upstream side of a coating station with respect to a travelling direction of the metal plate. Using the measured values, an applicator (e.g., coating die or blade) is moved to and from the metal plate. In this method, however, the measurement station is spaced apart from the coating station. Therefore, if there exists an error or height difference of about several micron-meters with respect to a direction perpendicular to a major surface of the metal plate between a first surface portion for supporting the metal plate at the measurement station and the second surface portion for supporting the same at the coating station, it is impossible to measure such height difference. This in turn prohibits a zero correction for correcting the height difference between the first surface portion at the measurement station in which the thickness of the metal plate is measured and the second surface portion at the coating station in which the coating material is coated thereon by the coating die. As a result, the gap between the applicator and the metal plate at the coating station can not be adjusted to a predetermined reference gap even by driving a motor to move the coating device to and from the metal plate with an aid of a controller.

There has been known a device for supplying the coating die with the coating material. This device has a reservoir for accommodating the coating material and a feed pipe fluidly connected between the reservoir and the coating die. The feed pipe is provided with a pump for feeding the coating material to the coating die and a filter so that the coating material is supplied from the reservoir to the coating die. Disadvantageously, when using a gear pump and volute pump as the pump, a number of small bubbles, each having a diameter of about 0.1mm, are invariably mixed into the coating material which would be discharged from the pump. The small bubbles hardly affect the thickness of the coated film when the feed pipe has an inner diameter of 5mm or more.

If, however, the feed pipe has an upwardly curved or bent portion, the small air-bubbles can get together to grow up into a relatively large bubble having a diameter of 1mm or more. The grown-up bubble tends to contract and expand while travelling in the pipe by the pressure of the pump. Then, if the feed pipe has an inner diameter of about 5mm or less, the resultant contraction and expansion leads a pressure variation in the coating material in the feed pipe, which in turn results in unevenness in the resultant coating. Particularly, this pressure variation will be problematic when a finished thickness of the coating is 10µm or less and further a great precision only having a thickness variation of ±5% or less is required for the resultant coating in a wet condition.

JP-A-07 328 513 shows an apparatus for coating a support surface by placing a substrate on it by means of nozzle. This apparatus comprises a base panel coating part, a nozzle, a gap sensor and a gap adjusting mechanism. The nozzle feeds a substrate on the surface of the support while it is relatively moved along the surface. The gap sensor detects the gap between the relatively moving nozzle and the surface of the support. The gap adjusting mechanism adjusted the gap by moving the nozzle relatively close to or apart from the surface based on the detected results by means of the gap sensor.

### SUMMARY OF THE INVENTION

Accordingly, the primary object of the invention is to provide methods capable of applying a substrate having three-dimensional deformations (e.g., twisting and curving) and unevenness in thickness with a coating material in a constant thickness by the use of a coating die.

These objects are solved by the features of claim 1 or 2.

For these purposes, a method for coating a substrate using a coating die according to the present invention comprises the steps of placing a substrate on a support surface which has a flatness of 2µm or less and has a plurality of holes, introducing a vacuum into the holes to draw the substrate into close contact with the support surface, and moving the coating die relative to the substrate and applying the substrate with a coating material discharged vertically and downwardly from the coating die.

Preferably, the method further comprises the steps of determining a capillary number based upon a viscosity and a surface tension of the coating material and a moving speed of the coating die relative to the substrate, determining a non-dimensional minimum coating thickness based upon a relationship between the capillary number and a non-dimensional minimum coating thickness, and determining a gap between the coating die and the substrate according to the non-dimensional minimum coating thickness. Preferably, the capillary number is 0.1 or less.

Another method for coating a substrate using a coating die according to the present invention comprises the steps of pre-measuring actual gaps in an entire coating area between successive portions of the surface of the substrate to be applied and the coating die spaced apart from the substrate, calculating deviations between the pre-measured actual gaps and a reference gap, and then moving the coating die for applying the coating material while the actual gap between the coating die and the substrate is adjusted.

### BRIEF DESCRIPTION OF THE DRAWINGS

These and other objects and features of the present invention will become clear from the following description taken in conjunction with the preferred embodiments thereof with reference to the accompanying drawings throughout which like parts are designated by like reference numerals, and in which:
Fig. 1 shows a sectional view of a coating system of the invention and an electric circuit thereof;
Fig. 2 is a graph showing a relationship between a capillary number and a non-dimensional minimum coating thickness;
Figs. 3A to 3C shows a process for applying a coating material on a substrate using a coating die according to the invention;
Fig. 4 shows a relationship of reference gap, actual gaps, and deviations;
Fig. 5 shows a general construction of a coating material supply unit used in the coating die system shown in Fig. 1;
Fig. 6 is a sectional view of a deaerator employed in the coating material supply unit;
Fig. 7 shows a modified embodiment of the deaerator;
Figs. 8A and 8B show arrangements of the deaerator in the coating material supply unit in which a pump and the deaerator are disposed at the same level;
Figs. 9A to 9C show another arrangements of the deaerator in the coating material supply unit in which the coating die is located higher than the pump; and
Figs. 10A and 10B show other arrangements of the deaerator in the coating material supply unit in which the coating die is located lower than the pump.

### PREFERRED EMBODIMENT OF THE INVENTION

### (1) First Embodiment

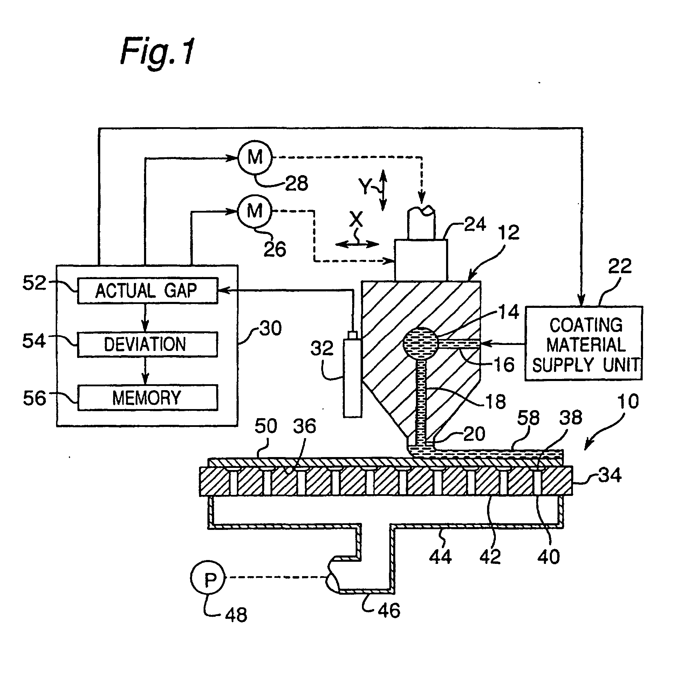

Fig. 1 depicts a coating system having a coating die according to the present invention. The coating system, generally indicated by reference numeral 10, includes a coating die 12. The coating die 12 includes therein a manifold 14 extending lengthwise, one or more through-holes 16 for supplying a coating material, for example, photo-resist, into the manifold 14, and a slot nozzle 18 formed along the manifold 14 for discharging the photo-resist therefrom. This coating die 12 is so arranged that an outlet 20 of the slot nozzle 18 is directed vertically and downwardly. The through-hole 16 is fluidly connected with a coating material supply unit 22 so that the photo-resist accommodated in the unit 22 is fed via the through hole 16 and manifold 14 to the slot nozzle 18 and finally discharged from the outlet 20.

The coating die 12 is secured on a support 24. The support 24 is drivingly coupled both with a horizontal drive mechanism 26 for moving the coating die 12 in a horizontal direction indicated by the arrow X which is perpendicular to the slot nozzle 18 and a vertical drive mechanism 28 for moving the same in a vertical direction indicated by the arrow Y. These mechanisms 26 and 28 are electrically connected with a calculation mechanism 30 so that, according to outputs from the calculation mechanism 30, they are independently energized. The vertical drive mechanism 28 comprises a servo motor and a mechanism having a lead screw and an associated screw member engaged therewith through a backlash-less threads, which enables the vertical drive mechanism 28 to move the coating die 12 ups and downs in a great precision of a micron-order. Further, the coating die 12 carries a non-contact range sensor 32 for measuring a gap therefrom to an object to be placed therebelow. The measurement of the sensor 32 is fed into the calculation mechanism 30.

A table 34 is positioned horizontally below the coating die 12 for supporting a glass plate 50 to be coated. A support surface 36 of the table 34 is machined to have a flatness of 2µm or less. The support surface 36 includes therein a plurality of grooves 38 arranged in a lattice while the table 34 includes a number of through-holes 40 extending from the grooves 38 to a bottom surface 42 thereof. A bottom surface 42 of the table 34 is covered with a hood 44 so that the hood 44 encloses therein the holes 40. The hood 44 is fluidly connected via an exhaust tube 46 with a vacuum pump 48. Therefore, placing the glass plate 50 to be coated on the surface 36 and then energizing the vacuum pump 48 will introduce a vacuum into the hood 44, through-holes 40 and grooves 38. This draws the glass plate 50 into close contact with the table 34, which eliminates deformations in the glass plate 50 such as twisting and curving.

The calculation mechanism 30 includes an actual gap calculating unit 52, a deviation calculating unit 54 and a memory unit 56. The actual gap calculating unit 52 determines, from the measurement of the range sensor 32, a gap (actual gap) between the outlet 20 and an underlying imaginary surface, or reference surface, on which an upper surface of an ideal glass plate, having no deformations such as curving or unevenness in thickness will position. The deviation calculating unit 54 calculates a deviation between the actual gap and a reference gap. The reference gap is determined in a manner described below. The memory unit 56 stores the calculated values as required. Also, the calculation mechanism 30 elevates the coating die 12 by driving the vertical drive mechanism 28 so that the deviation is eliminated to adjust the actual gap to the reference gap.

Incidentally, the reference surface of the ideal glass plate is the imaginary surface and therefore the reference gap can not be measured. For this reason, practically the actual gap, i.e., pseudo actual-gap, is determined by measuring a gap between the support surface 36 and the outlet 20 and then subtracting a thickness of the ideal glass plate 50 from the previously measured gap.

In operation of the coating die system so constructed, a glass plate 50 to be coated is positioned on the table 34. This plate 50 is so sized that it covers the entire grooves 38 formed in the support surface 36 of the table 34. Then the vacuum pump 48 is energized. This introduces vacuum in the hood 44 to draw the glass plate 50 into close contact with the support surface 36 of the table 34, which results in that the deformations of the glass plate 50 such as twisting and curving are eliminated. Next the range sensor 32 measures the actual gap between the outlet 20 and the reference surface. Then the calculation mechanism 30 determines a deviation between the actual gap and the reference gap. Also, the calculation mechanism 30 activates the vertical drive mechanism 28 to adjust the actual gap between the outlet 20 and the glass plate 50 to the reference gap. Subsequently, while keeping the reference gap, the photo-resist 58 is supplied to the manifold 14 from the coating material supply unit 22 and the coating die 12 is moved by the horizontal drive mechanism 26 in the direction indicated by the arrow X perpendicular to the slot nozzle 18. This results in that the glass plate 50 is applied with the photo-resist 58 discharged from the outlet 20 through the slot nozzle 18.

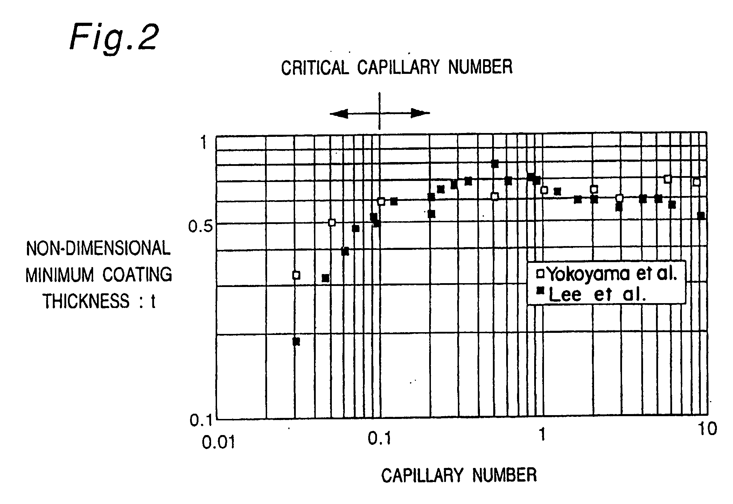

Discussions will be made to the reference gap. The reference gap is determined using a relationship (see Fig. 2) between a capillary number obtained from experiment performed by Lee et al. and a non-dimensional minimum coating thickness and following equations (1) and (2). The experiment made by Lee et al. is fully described in Chemical Engineering Science, vol. 47, No. 7, pages 1,703 to 1,713, in 1992. The inventors, Yokoyama et al., of the present invention, verified the experimental results by a numerical analysis. Consequently, the results of the analysis found to be almost identical to those of the experiments, as shown in Fig. 2.

In a graph shown in Fig. 2, the capillary number Ca is in substantially proportion to non-dimensional minimum coating thickness t (a ratio of non-dimensional coating thickness) if the capillary number Ca is less than a critical capillary number of 0.1. Therefore, in the condition that the capillary number Ca is within the proportional area, by adjusting the reference gap to a certain value which exists between maximum and minimum gaps, a coating having a thickness which corresponds to the reference gap can be obtained.

The maximum gap is calculated by calculating the capillary number obtained by substituting values representing properties of the coating material and the coating speed into the equation (1), then determining the corresponding non-dimensional minimum coating thickness from the above calculated capillary number with reference to the graph in Fig. 2, and finally substituting the above determined non-dimensional minimum coating thickness into the equation (2). The minimum gap, on the other hand, is calculated by determining the non-dimensional minimum coating thickness from the threshold capillary number of 0.1 with reference to Fig. 2, and then substituting the above determined non-dimensional minimum coating thickness into the equation (2).$\text{Ca = µ · U / σ}$$\text{t = h / H}$ wherein
Ca : Capillary number,
µ : Viscosity of coating material (Pa·S),
U : Coating speed (m/s),
σ : Surface tension (N/m),
t : Non-dimensional minimum coating thickness,
h : Minimum thickness of coating material (µm), and
H : Gap from outlet to plate (µm).

Note that the maximum and minimum gaps are an upper limit gap and a lower limit gap, respectively, that can keep a stable and continuous meniscus of the coating material between the outlet and the plate. Therefore, if the gap is larger than the maximum gap or smaller than the minimum gap, no stable meniscus will be formed. On the other hand, if the gap ranges between the maximum and minimum gaps, the surface tension of the coating material in the gap serves as a shock absorber, which absorbs variations of the gap caused by the unevenness of the plate and thereby ensures the coating die to form a coating of a desired thickness on the plate.

Discussions will be made to the determinations of the maximum and minimum gaps. Assume that the photo-resist 58 has a viscosity (µ) of 0.06 Pa·s, a surface tension (σ) of 30×10⁻³ N/m, and the glass plate 50 is 650 mm long, 550 mm wide, and 1.1 mm ±10 µm thick. Also assumed that a coating speed is 10 mm/s and a target thickness of the coating is 10 µm. In this case, by substituting the viscosity (µ) of 0.06 Pa·S of the photo-resist 58, coating speed (U) of 10 mm/s, and surface tension (σ) of 30×10⁻³ N/m into the equation (1), the capillary number (Ca) of 0.02 is determined. Then, according to the graph in Fig.2, by using the calculated capillary number (i.e., 0.02), the non-dimensional minimum coating thickness (t) of 0.15 is determined. Finally, by substituting the non-dimensional minimum coating thickness t of 0.15 and the coating thickness of 10 µm into the equation (2), the maximum gap of 66 µm is determined.

The reference gap will be minimized if the capillary number (Ca) is approximately the critical capillary number of 0.1. Therefore, from the graph in Fig. 2, the non-dimensional minimum coating thickness corresponding to the capillary number of 0.1 is determined as about 0.6. Then, for the target thickness of 10 µm, the minimum gap of about 16µm is determined by the equation (2).

Consequently, if the actual gap from the outlet 20 to the glass plate 50 ranges between the minimum gap (i.e., 16 µm) and the maximum gap (i.e., 66 µm), the coating die 12 will form a coating of 10 µm on the glass plate 50 in spite of the gap variation due to the unevenness of the glass plate 50.

The curving of the plate 50 is substantially eliminated by drawing it onto the support surface 36 of the table 34. The plate 50, however, still includes the unevenness in thickness of ± 10.0 µm. Therefore, the upper surface of the plate 50 possibly includes a height error of ± 11.0 µm against the reference surface.

However, the gap between the outlet 20 of the coating die 12 and the glass plate 50 can be adjusted from 16 µm to 66 µm. Therefore, in case that the actual gap is set to 55 µm, even if the gap variation is increased to the maximum and thereby the outlet 20 takes a position that is farthest from the glass plate 50, the actual gap is still equal to or less than the maximum value of 66 µm (=55µm+11µm) and even when the gap variation is decreased to the minimum and thereby the outlet 20 takes a position closest to the glass plate, the actual gap is 44 µm (=55µm-11µm). Also, if the gap is 44 µm, there still exists a clearance of 34 µm (=44µm-10µm) between the surface of the coating having a thickness of 10 µm and the outlet 20, ensuring a coating in which a sufficient space is interposed between the outlet 20 of the coating die 12 and the glass plate 50. Further, increasing the reference gap will minimize the adverse effect of the unevenness in the surface of the substrate.

It should be understood that the range sensor 32 is not limited to the non-contact type sensor and a contact-type sensor can also be utilized instead.

Also, although in the previous vacuum mechanism the hood 44 covers the entire bottom surface 42 of the table 34, each of the through holes 40 in the table 34 may be connected directly through an associated branch tube with the exhaust tube 46 for drawing the glass plate 50 into close contact with the table 34.

As described above, according to the previous embodiment, the glass plate is supported on the table having a flatness of 2.0 µm or less and it is drawn close to the table, which eliminates the twisting and curving of the glass plate. Eventually, the gap between the outlet of the coating die and the upper surface of the substrate includes a small error consisting exclusively of the unevenness in thickness of the glass plate and another evenness of the table (i.e., 2.0 µm or less), which will be canceled by the surface tension of the meniscus formed between the outlet of the coating die and the glass plate. This ensures the glass plate to be applied with a film having a certain thickness while keeping the reference gap.

Further, by setting the capillary number 0.1 or less, the number being determined by the viscosity and surface tension of the coating material and the coating speed, a coating having a desired thickness can be applied onto the glass plate while the gap from the coating die to the glass plate is extended as large as possible.

### (2) Second Embodiment

Although the gap between the outlet of the coating die to the glass plate is fixed from the beginning to the completion of the coating in the previous embodiment, the gap may be changed according to the unevenness of the glass plate so as to adjust the gap between the outlet and the glass plate to the reference gap.

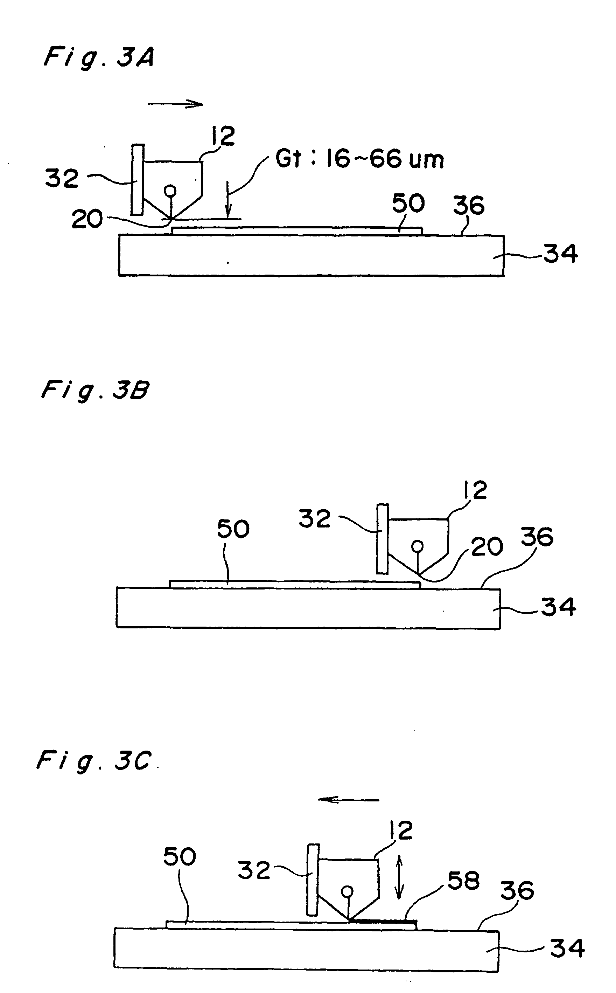

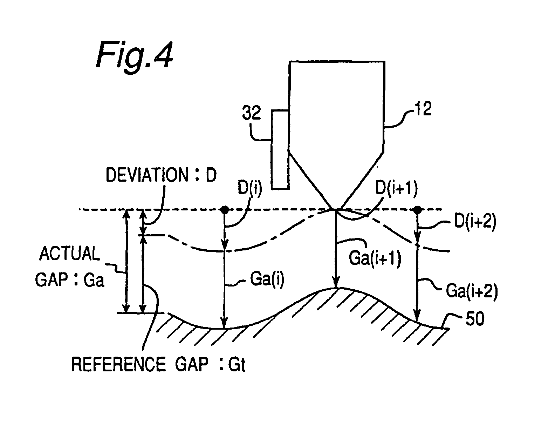

Discussions will be made to this application method with reference to Figs. 3A to 3C and Fig. 4. In this method, the vacuum pump 48 is energized to draw the glass plate 50 located on the table 34 to the support surface 36 of the table 34, thereby eliminating the deformations such as twisting and curving. Next, as shown in Fig. 3A, the gap from the outlet 20 to the glass plate 50 is adjusted to a reference gap Gt that is a specific value within from 16 to 66 µm. Then, as shown in Fig. 3B, the coating die 12 is moved by the horizontal drive mechanism 26 to pre-scan the entire surface of the glass plate 50 on which the photo-resist will be applied by the coating die 12 to measure the actual gaps Ga at certain intervals using the non-contact range sensor 32. Also, based upon the measured values, the actual gap calculating unit 52 in the calculation mechanism 30 determines the actual gaps Ga(i), Ga(i+1), Ga(i+2), ··· between the outlet 20 and each portion of the plate. Further, the deviation calculating unit 54 calculates deviations D(i), D(i+1), D(i+2), ··· between the reference gap Gt and the corresponding actual gaps Ga(i), Ga(i+1), Ga(i+2), ···. The calculated deviations are stored in the memory unit 56. In this calculation, consideration is made to a relationship between the coating speed (i.e., moving speed of the coating die) and the elevation speed of the coating die 12, i.e., a time delay of the vertical movement with respect to the horizontal movement. Also, the measurement of the actual gap is performed against the glass plate onto which the coating material is applied and therefore it is not necessary to compensate the difference of levels between the measuring position and the coating position, which would otherwise occurred if the two positions are spaced apart from each other.

After the calculation has completed, as shown in Fig. 3C, the coating die 12 is moved horizontally and the photo-resist 58 is fed from the coating material supply unit 22 to the coating die 12 for coating. At this stage, as described before, the coating die 12 is elevated ups and downs by the vertical drive mechanism 28 according to the deviations D calculated with taking both the coating and elevation speeds into account, which ensures that the actual gap from the outlet 20 to the surface of glass plate 50 is always kept constant and thereby a coating having a constant thickness is applied onto the glass plate 50.

As described, prior to the coating, the deviations D between the reference gap Gt and the actual gaps Ga has been calculated. Also, the deviations are determined with taking the elevating and moving speeds of the coating die 12 into account. Therefore, the entire surface of the glass plate 50 can readily be applied with the coating of constant thickness. If the actual gap Ga is measured by the non-contact range sensor 32, the moving speed of the coating die 12 may be lower than that of coating speed to increase the measurement precision.

According to the coating method using coating die, the calculation is carried out in the calculation mechanism 30 with taking the coating speed and elevation speed of the outlet 20 and therefore the actual gap between the surface of the glass plate 50 and the outlet 20 of the coating die 12 can always be kept to the reference gap without depending upon the coating speed. Incidentally, when the coating would be accelerated because of an increase of productivity and thereby a range between the maximum and minimum reference gaps would be narrowed, the coating method in the first embodiment in which the gap from the coating die to the table is fixed may result in a large deviation between the actual gap and the reference gap, making it difficult to form a constant thickness. The method of this embodiment, however, can always adjust the actual gap to the reference gap. That is, according to this method, because the consideration is made to the relationship between the elevations speed of the coating die 12 (outlet 20) and the coating speed, i.e., time delay, the coating speed can be changed freely.

Also, this invention may be applied to a rigid glass plate rather than the flexible one. In this case, it is not necessary to draw the plate onto the table 34.

Further, although the coating die 12 includes one set of vertical driving mechanism 28 and range sensor 32, it may have two sets. In this case, the vertical driving mechanisms 28 are arranged at opposite side ends of the coating die 12 and the range sensors 32 are positioned adjacent to opposite side ends of the coating die 12 so that each of which can cooperate with the associated the vertical driving mechanism 28. With two pairs of range sensors and associated the vertical driving mechanisms 28, the thickness variations of the glass plate on opposite sides can be considered in the application.

Furthermore, it is not necessary to calculate the reference gap between the coating die and the glass plate using the capillary number Ca as shown in the previous embodiments. Alternatively, the reference gap may be determined from the experiments regardless of the capillary number. Even in this case, the glass plate should be drawn onto the table to eliminate the twisting and curving of the glass plate.

As can be seen from the above description, according to this embodiment, it is not necessary to simultaneously carry out the measurement, calculation, and elevation of the outlet, and therefore the coating die can be moved ups and downs to keep the reference gap even if the coating speed is relatively high. This ensures the gap between the plate surface and the outlet to be reference gap, regardless of the coating speed, even if the substrate has deformations, for example, twisting, curving, and unevenness in thickness. As a result, even when the coating has a relatively small thickness of 10 µm or less and the extremely precise coating is required in which the accuracy of the thickness should be less than ± 5 %, the desired coating can be formed.

Further, the non-contact type range sensor is integrally mounted on the coating die. This permits that the measurement is made at the coating position, which leads a precise measurement of the actual gap.

Furthermore, the flexible plate can be drawn to the flat table by the suction mechanism to remove its twisting and curving, which ensures the plate to be applied with the coating of desired thickness.

### (3) Coating material supply unit

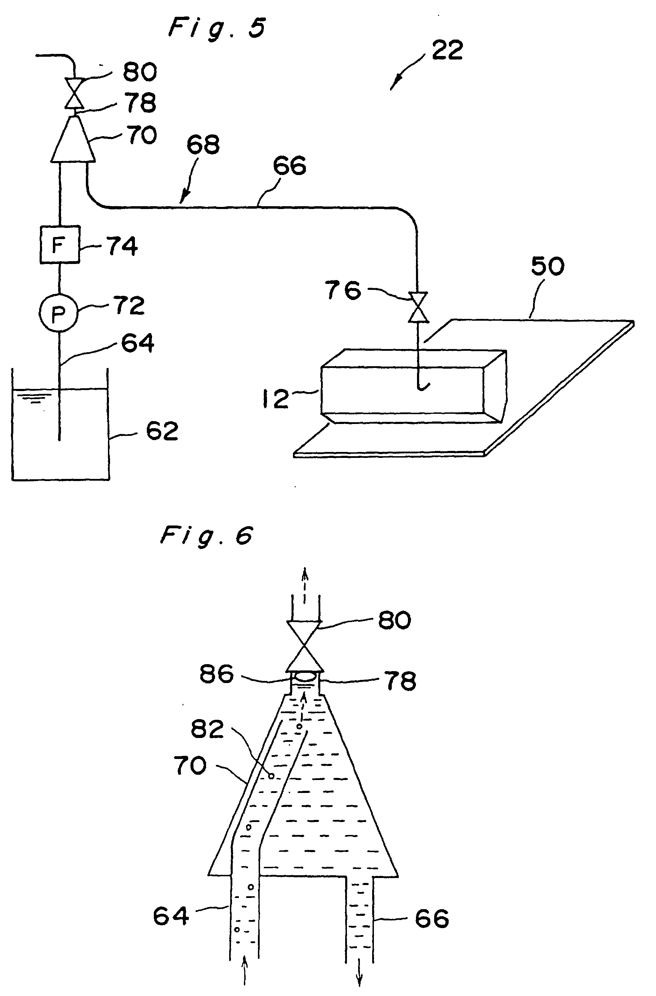

Referring to Fig. 5, the coating material supply unit 22 has a tank 62 for accommodating the coating material which is connected with the coating die 12 by a pipe 68 having a first pipe 64 and a second pipe 66. The first and second pipes 64 and 66 are connected each other through a deaerator 70. The first pipe 64 has a pump 72 and a filter 74. The pump 72 positions on the side adjacent the tank 62 and the filter 74 positions on the other side thereof. Further, the second pipe 66 has a valve 76 adjacent the coating die 12.

As shown in Fig. 6, the deaerator 70, generally in the form of cone, has at its top portion an outlet 78 for discharging air. The outlet 78 is connected through a valve 80 to the atmosphere. The valve 80 may be controlled manually or electrically. To decrease an adverse effect of a pressure variation in the deaerator 70 which is caused by contractions and expansions of a large air bubble collected adjacent the outlet 78, the deaerator 70 has a significantly large volume compared with the big bubble to be possibly formed therein. That is, the deaerator 70 is designed to have a volume that can receive a large amount of coating material compared with a bubble possibly formed therein. In addition, the first pipe 64 extends into the interior of the deaerator 70 and then terminates adjacent the top of deaerator 70. On the other hand, the second pipe 66 is connected to the bottom of the deaerator 70. This pipe arrangement ensures that small bubbles 82 can be collected in the outlet 78 and further no coating material with the small bubbles 82 is discharged to the second pipe 66.

Preferably, where the pipe 68 between the pump 72 and the coating die 12 would include a bent portion and extend upward from the pump, or where the pipe connected with the pump would extend horizontally and then curve upward, the deaerator 70 is positioned at or adjacent the next bent portion from which it extends in the horizontal or downward direction. In contrary to this, if the pipe would extend horizontally from the pump and then curve downward, the deaerator 70 is preferably positioned at or adjacent the bent portion. This is because the bubbles tend to be collected in the vicinity of the bent portion.

Three arrangements can be supposed for the combination of pump 72 and coating die 12. That is, the pump 72 may be positioned at the same level as the costing die 12 or may be positioned higher or lower than the coating die 12.

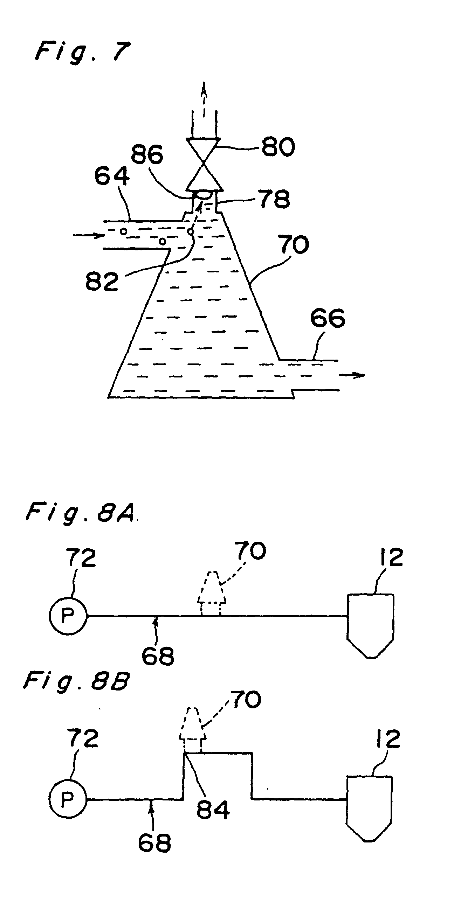

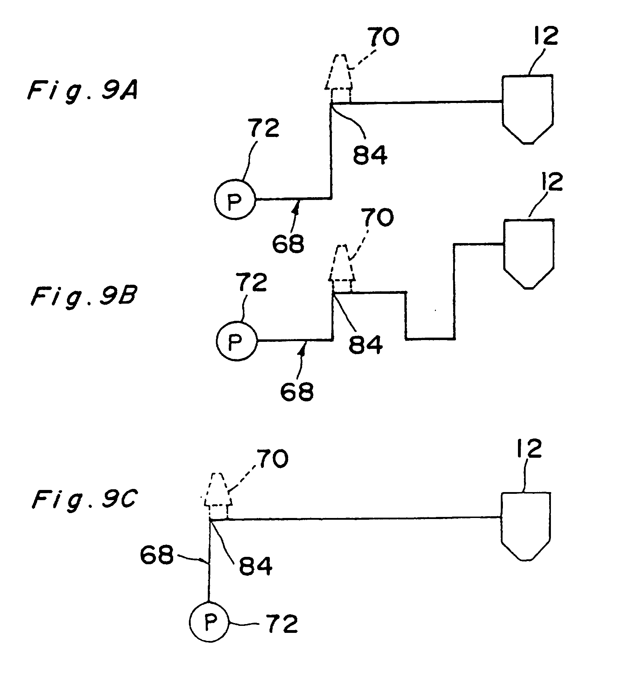

If the pump 72 and the coating die 12 are arranged at the same level as shown in Fig. 8A, in which the pump 72 is connected to the coating die 12 through a straight pipe 68 extending horizontally, the deaerator 70 may be disposed at any position of the pipe 68. If the pump 72 and the coating die 12 are connected through the pipe 68 including a plurality of bent portions to avoid collision with obstacles as shown in Fig. 8B, the deaerator 70 is arranged at or adjacent the first bent portion 84 where a first vertical pipe portion adjacent the pump 72 is connected at its uppermost portion with a subsequent horizontal pipe portion. Likewise, if the coating die 12 is located higher than the pump 72, as shown in Figs. 9A to 9C, the deaerator 70 is preferably arranged at or adjacent the bent portion 84.

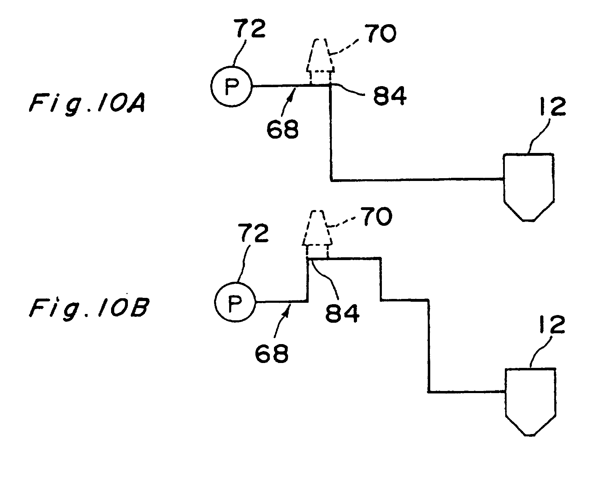

As shown in Fig. 10A, if the coating die 12 is located lower than the pump 72, the deaerator 70 is preferably arranged at the first bent portion 84 where the pipe 68 extends horizontal and then turns downward. If, however, the pipe 68 includes a upwardly bent portion to avoid collision with obstacles as shown in Fig. 10B, the deaerator 70 is preferably arranged at or adjacent the first bent portion 84 where the pipe 68 extend upward and then turned horizontal.

In operation of the coating material supply unit 22 for the coating die 12 thus constructed, the valve 76 is opened and the other valve 80 is closed and then the pump 72 is energized, thereby the first and second pipes 64 and 66 and the deaerator 70 are filled with the coating material to prepare for the coating. At this stage, the valve 80 is opened for a while to exhaust the air collected in the outlet 78 in the deaerator 70.

Subsequently, the pump 72 feeds the coating material continuously into the coating die 12 to perform the coating. The coating material, flowing from the pump 72 through the filter 74 into the deaerator 70, can contain small bubbles 82 as shown in Fig. 6. When entered in the deaerator 70, small bubbles 82 move upward due to their buoyancy to grow up into a big bubble 86 at the outlet 78 as shown in Fig. 6. The big bubble 86 is forced out through the outlet 78 due to the pressure of the coating material at periodical openings of the valve 80. The coating material from which the most bubbles have been removed is then fed to the second pipe 66 by the pressure applied from the pump 72. At this time, the volume of the deaerator 70 is relatively large, which decreases the contractions and expansions of the coating material fed from the first pipe 64. This ensures that the coating material is fed out at a constant pressure. Then, the coating material is supplied to the coating die 12 by which it is applied onto the glass plate 50.

Although the substrate to be applied is a plate in the previous embodiments, it may be a continuous strip-like member.

Also, not limited to the conical configuration, the deaerator 70 may have other configuration that includes a small area porion at its top adjacent the outlet 78 to collect small bubbles 82 in the coating material.

Further, any pipe arrangement for the deaerator 70 can be utilized which enables the small bubbles 82 to be collected at the deaerator 70. For example, as shown in Fig. 7, the first and second pipes 64 and 66 may be connected with an upper side portion and lower side portion of the deaerator 70, respectively.

As described above, according to the coating material supply unit, the bubbles in the coating material are collected by the deaerator and then removed out of the coating material supply circuit. Also, the volume of the collected air is small enough compared with that of the deaerator so that no substantial pressure vibration is generated in the coating material regardless of the pressure for supplying the coating material. This ensures the coating material to be fed to the manifold in the coating die at a constant pressure, which eventually provides the plate with a coating of constant thickness.

While there is shown and described herein certain specific structure embodying the invention, it will be manifest to those skilled in the art that various modifications and rearrangements of the parts may be made without departing from the scope of the underlying inventive concept and that the same is not limited to the particular forms herein shown and described except insofar as indicated by the scope of the appended claims.

## Claims

1. A method of coating, comprising:
placing a substrate (50) onto a support surface (36) having a flatness of 2 µm or less, and wherein said support surface (36) has a plurality of holes (40);
introducing a vacuum into said holes (40) to attract said substrate (50) into close contact with said support surface (40) in order to eliminate deformations of said substrate (50);
determining a capillary number as a function of a viscosity of a coating material (58), a surface tension of said coating material (58), and a coating speed of a coating die relative to said substrate (50) by the equation:$\text{Ca=µU/s,}$
wherein Ca=said capillary number, µ=said viscosity (Pa·S), U=said coating speed (m/s), and s=said surface tension (N/m), and
wherein said determining said capillary number includes selecting said capillary number to be 0.1 or less;
determining a corresponding non-dimensional minimum coating thickness as a function of said capillary number;
determining a reference gap between said coating die (12) and said substrate (50) as a function of said corresponding non-dimensional coating thickness and a target thickness of said coating material by the equation:$\text{H=h/t,}$ wherein H=said reference gap, h=said target thickness of said coating material (58), and t=said corresponding non-dimensional coating thickness;
moving horizontally said coating die (12) relative to said substrate (50);
maintaining said reference gap between said coating die (12) and a reference surface of said substrate (50);
and
applying said coating material (58) onto said substrate (50) by downwardly discharging said coating material (58) from said coating die (12).

2. A method of coating, comprising:
placing a substrate (50) onto a support surface (36) having a flatness of 2 µm or less, and wherein said support surface (36) has a plurality of holes (40);
introducing a vacuum into said holes (40) to attract said substrate (50) into close contact with said support surface in order to eliminate deformations of said substrate (50);
determining a capillary number as a function of a viscosity of a coating material (58), a surface tension of said coating material, and a coating speed of a coating die (12) relative to said substrate by the equation:$\text{Ca=µU/s,}$
wherein Ca-said capillary number, p=said viscosity (Pa·S), U=said coating speed (m/s), and s=said surface tension (N/m), and
wherein determining said capillary number includes selecting said capillary number to be 0.1 or less;
determining a corresponding non-dimensional minimum coating thickness as a function of said capillary number;
determining a reference gap between said coating die (12) and said substrate (59) as a function of said corresponding non-dimensional coating thickness and a target thickness of said coating material (58) by the equation:$\text{H=h/t,}$ wherein H=said reference gap, h=said target thickness of said coating material, and t=said corresponding non-dimensional coating thickness;
pre-measuring actual gaps, over an entire coating area of said substrate (59) between successive portions of a surface of said substrate (50) and a coating die spaced apart from said substrate after said introducing said vacuum into said holes (40) prior to a coating of said substrate;
calculating deviations between each of said pre-measured actual gaps and a reference gap;
moving horizontally said coating die relative to said substrate (50) after said calculating operation;
adjusting an actual gap between said coating die (12) and said surface of said substrate (50) to said reference gap by vertically moving said coating die (12) based upon said calculated deviations; and
applying said coating material (58) onto said substrate surface of said substrate (50), as pre-measured, during said horizontal moving and adjusting operations.

## Patentansprüche

1. Beschichtungsverfahren, mit:
Plazieren eines Substrates (50) auf einer Aufnahmefläche (36) mit einer Ebenheit von 2µm oder darunter und wobei die Aufnahmefläche (36) eine Anzahl von Löchern (40) hat;
Einleiten eines Unterdrucks in die Löcher (40), um das Substrat (50) in engen Kontakt mit der Aufnahmefläche (40) zu ziehen, um Verformungen des Substrates (50) zu eliminieren;
Bestimmen einer Kapillarzahl als Funktion der Viskosität eines Beschichtungsmaterials (58), einer Oberflächenspannung des Beschichtungsmaterials (58) und einer Beschichtungsgeschwindigkeit einer Beschichtungsform relativ zu dem Substrat (50) durch die Gleichung:$\text{Ca = µU/s,}$
wobei Ca = die Kapillarzahl, µ = die Viskosität (Pa·S), U = die Beschichtungsgeschwindigkeit (m/s), und s = die Oberflächenspannung (N/m) ist, und
wobei die Bestimmung der Kapillarzahl das Wählen der Kapillarzahl auf 0,1 oder darunter umfaßt;
Bestimmen einer entsprechenden dimensionslosen Minimalbeschichtungsdicke als Funktion der Kapillarzahl;
Bestimmen einer Referenzlücke zwischen der Beschichtungsform (12) und dem Substrat (50) als Funktion der entsprechenden dimensionslosen Beschichtungsdicke und einer Zieldicke des Beschichtungsmaterials durch die Gleichung:$\text{H = h/t,}$ wobei H = die Bezugslücke, h = die Zieldicke des Beschichtungsmaterials (58), und t = die entsprechende dimensionslose Beschichtungsdicke ist;
horizontales Bewegen der Beschichtungsform (12) relativ zu dem Substrat (50);
Aufrechterhalten der Bezugslücke zwischen der Beschichtungsform (12) und einer Referenzoberfläche des Substrats (50); und
Aufbringen des Beschichtungsmaterials (58) auf das Substrat (50) durch nach unten Abgeben des Beschichtungsmaterials (58) aus der Beschichtungsform (12).

2. Beschichtungsverfahren, mit:
Plazieren eines Substrates (50) auf einer Aufnahmefläche (36) mit einer Ebenheit von 2µm oder darunter, und wobei die Aufnahmefläche (36) eine Anzahl von Löchern (40) hat;
Einleiten eines Unterdruckes in die Löcher (40), um das Substrat (50) in engen Kontakt mit der Aufnahmefläche zu ziehen, um Verformungen des Substrates (50) zu eliminieren;
Bestimmen einer Kapillarzahl als eine Funktion der Viskosität eines Beschichtungsmaterials (58), einer Oberflächenspannung des Beschichtungsmaterials und einer Beschichtungsgeschwindigkeit einer Beschichtungsform (12) relativ zu dem Substrat durch die Gleichung:$\text{Ca = µU/s,}$
wobei Ca = die Kapillaranzahl ist, µ = die Viskosität (Pa·S), U = die Beschichtungsgeschwindigkeit (m/s) und s = die Oberflächenspannung (N/m) ist, und
wobei das Bestimmen der Kapillarzahl das Wählen der Kapillarzahl auf 0,1 oder darunter umfaßt;
Bestimmen einer entsprechenden dimensionslosen Minimalbeschichtungsdicke als eine Funktion der Kapillarzahl;
Bestimmen einer Referenzlücke zwischen der Beschichtungsform (12) und dem Substrat (59) als Funktion der entsprechenden, dimensionslosen Beschichtungsdicke und einer Zieldicke des Beschichtungsmaterials (58) durch die Gleichung:$\text{H = h/t,}$ wobei H = die Referenzlücke, h = die Zieldicke für das Beschichtungsmaterial und t = die entsprechende dimensionslose Beschichtungsdicke ist;
vorab Messen der tatsächlichen Lücke über eine gesamte Beschichtungsfläche des Substrats (59) zwischen aufeinanderfolgenden Teilen einer Oberfläche des Substrats (50) und einer Beschichtungsform, die zu dem Substrat beabstanded ist, nach dem Einleiten des Vakuums in die Löcher (40) vor dem Beschichten des Substrats;
Berechnen der Abweichungen zwischen jeder der vorab gemessenen tatsächlichen Lücken und einer Referenzlücke;
horizontales Bewegen der Beschichtungsform relativ zu dem Substrat (50) nach dem Rechenvorgang;
Einstellen einer tatsächlichen Lücke zwischen der Beschichtungsform (12) und der Oberfläche des Substrates (50) auf die Referenzlücke durch vertikales Bewegen der Beschichtungsform (12) basierend auf den berechneten Abweichungen; und
Aufbringen des Beschichtungsmaterials (58) auf die Substratoberfläche des Substrats (50) wie vorab gemessen während der Horizontalbewegung und der Einstellvorgänge.

## Revendications

1. Procédé d'enduction, comprenant :
la mise en place d'un substrat (50) sur une surface de support (36) ayant une planéité de 2 µm ou moins, ladite surface de support (36) comportant une pluralité de trous (40) ;
l'introduction d'un vide dans lesdits trous (40) pour attirer ledit substrat (50) en contact étroit avec ladite surface de support (40) afin d'éliminer les déformations dudit substrat (50) ;
la détermination d'un nombre capillaire qui est fonction d'une viscosité d'un matériau d'enduction (58), d'une tension superficielle dudit matériau d'enduction (58) et d'une vitesse d'enduction d'une filière d'enduction par rapport audit substrat (50) d'après l'équation :$\text{Ca = µU/s,}$
où Ca = ledit nombre capillaire, µ = ladite viscosité (Pa.S), U = ladite vitesse d'enduction (m/s) et s = ladite tension superficielle (N/m), et
où ladite détermination dudit nombre capillaire comprend la sélection, pour le nombre capillaire, d'une valeur égale ou inférieure à 0,1 ;
la détermination d'une épaisseur d'enduction minimum non-dimensionnelle correspondante qui est fonction dudit nombre capillaire ;
la détermination d'un écartement de référence entre ladite filière d'enduction (12) et ledit substrat (50) qui est fonction de ladite épaisseur d'enduction non-dimensionnelle correspondante et d'une épaisseur cible dudit matériau d'enduction d'après l'équation :$\text{H = h/t,}$ où H = ledit écartement de référence, h = ladite épaisseur cible dudit matériau d'enduction (58), et t = ladite épaisseur d'enduction non-dimensionnelle correspondante ;
le déplacement horizontal de ladite filière d'enduction (12) par rapport audit substrat (50) ;
le maintien dudit écartement de référence entre ladite filière d'enduction (12) et une surface de référence dudit substrat (50) ;
l'application dudit matériau d'enduction (58) sur ledit substrat (50) par décharge vers le bas dudit matériau d'enduction (50) depuis ladite filière d'enduction (12).

2. Procédé d'enduction, comprenant :
la mise en place d'un substrat (50) sur une surface de support (36) ayant une planéité de 2 µm ou moins, ladite surface de support (36) comportant une pluralité de trous (40) ;
l'introduction d'un vide dans lesdits trous (40) pour attirer ledit substrat (50) en contact étroit avec ladite surface de support afin d'éliminer les déformations dudit substrat (50) ;
la détermination d'un nombre capillaire qui est fonction d'une viscosité d'un matériau d'enduction (58), d'une tension superficielle dudit matériau d'enduction (58) et d'une vitesse d'enduction d'une filière d'enduction (12) par rapport audit substrat (50) d'après l'équation :$\text{Ca = µU/s,}$
où Ca = ledit nombre capillaire, µ = ladite viscosité (Pa.S), U = ladite vitesse d'enduction (m/s) et s = ladite tension superficielle (N/m), et
où la détermination dudit nombre capillaire comprend la sélection, pour le nombre capillaire, d'une valeur égale ou inférieure à 0,1 ;
la détermination d'une épaisseur d'enduction minimum non-dimensionnelle correspondante qui est fonction dudit nombre capillaire ;
la détermination d'un écartement de référence entre ladite filière d'enduction (12) et ledit substrat (59) qui est fonction de ladite épaisseur d'enduction non-dimensionnelle correspondante et d'une épaisseur cible dudit matériau d'enduction (58) d'après l'équation :$\text{H = h/t,}$ où H = ledit écartement de référence, h = ladite épaisseur cible dudit matériau d'enduction, et t = ladite épaisseur d'enduction non-dimensionnelle correspondante ;
la pré-mesure des écartements réels, sur une zone d'enduction entière dudit substrat (59), entre des parties successives d'une surface dudit substrat (50) et une filière d'enduction espacée dudit substrat après ladite introduction dudit vide dans lesdits trous (40) avant enduction dudit substrat ;
le calcul des déviations entre chacun desdits écartements réels pré-mesurés et un écartement de référence ;
le déplacement horizontal de ladite filière d'enduction par rapport audit substrat (50) après ladite opération de calcul ;
l'ajustement d'un écartement réel entre ladite filière d'enduction (12) et ladite surface dudit substrat (50) à la valeur dudit écartement de référence par un déplacement vertical de ladite filière d'enduction (12) d'après lesdites déviations calculées ; et
l'application dudit matériau d'enduction (58) sur ladite surface de substrat dudit substrat (50), comme pré-mesuré, durant ledit déplacement horizontal et lesdites opérations d'ajustement.
